(19)

**Europäisches Patentamt**
**European Patent Office**
**Office européen des brevets**

(11) **EP 4 471 965 A1**

(12) **EUROPEAN PATENT APPLICATION**
published in accordance with Art. 153(4) EPC

(43) Date of publication:
04.12.2024 Bulletin 2024/49

(21) Application number: 23746787.3

(22) Date of filing: 18.01.2023

(51) International Patent Classification (IPC):
$H01M\ 50/451^{(2021.01)}$        $H01M\ 10/08^{(2006.01)}$
$H01M\ 50/42^{(2021.01)}$         $H01M\ 50/434^{(2021.01)}$
$H01M\ 50/446^{(2021.01)}$        $H01M\ 50/46^{(2021.01)}$
$H01M\ 50/491^{(2021.01)}$

(52) Cooperative Patent Classification (CPC):
H01M 10/08; H01M 50/42; H01M 50/434;
H01M 50/446; H01M 50/451; H01M 50/46;
H01M 50/491; Y02E 60/10

(86) International application number:
PCT/JP2023/001338

(87) International publication number:
WO 2023/145573 (03.08.2023 Gazette 2023/31)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.01.2022 JP 2022010396

(71) Applicant: **Asahi Kasei Kabushiki Kaisha
Tokyo 1000006 (JP)**

(72) Inventors:
• **MIZUNO, Haruna**
  **Tokyo 100-0006 (JP)**
• **KIYAMA, Tomonori**
  **Tokyo 100-0006 (JP)**
• **IWAMA, Juri**
  **Tokyo 100-0006 (JP)**

(74) Representative: **Strehl Schübel-Hopf & Partner
Maximilianstrasse 54
80538 München (DE)**

(54) **SEPARATOR FOR LEAD ACID STORAGE BATTERIES, AND LEAD ACID STORAGE BATTERY USING SAME**

(57)    The purpose of the present disclosure is to provide: a separator for lead acid storage batteries, the separator having excellent charge acceptability and excellent cycle characteristics; and a lead acid storage battery which uses this separator for lead acid storage batteries. A separator for lead acid storage batteries according to the present disclosure comprises a base material and a layer that is superposed on at least one surface of the base material; and the layer contains a carbon material, while having a void fraction of 7.0% to 75.0%.

Fig. 1

## Description

Technical Field

The present disclosure relates to a separator for lead-acid batteries and a lead-acid battery using the same. This application claims priority based on Japanese Patent Application No. 2022-010396 filed on January 26, 2022, the disclosure of which is incorporated by reference herein.

Background Art

Lead-acid batteries are widely used worldwide in automotive applications, e.g., passenger cars, buses, trucks, motorcycles and golf carts, and in industrial applications, e.g., forklifts, cultivating machinery, railways, UPS, and communication equipment. In particular, lead-acid batteries have recently been used in automotive applications such as hybrid electric vehicles (HEVs) and idling start-and-stop (ISS) vehicles, which require performance capable of operating at a partial state of charge (PSoC) of approximately 50% to 90%.

The main performance requirements for lead-acid batteries operating in such a partially charged state are charge acceptance performance and cycle characteristics. Lead-acid batteries provided with charge control functions or regenerative charging functions for improved environmental performance and fuel efficiency are limited with short opportunities for recharging. Charge acceptance performance is therefore required for high-energy charging of batteries in an efficient manner. The cycle characteristics of a battery kept in PSoC for long periods tend to deteriorate. This is because the battery in PSoC tends to form highly crystalline sulfate salts on the electrode surfaces, with accumulation of the formed sulfate crystals drastically lowering the charge acceptance performance of the electrodes and eventually affecting the battery life.

A separator for lead-acid batteries usually is a membrane having a microporous structure with a withstand voltage property and is disposed in a closely bonded state with the surfaces of both the positive electrode and negative electrode to prevent short circuiting. By improving the structure of the separator and controlling the electrode surface reactions which occur at the close contact surfaces between the separator and the electrodes, the battery performance can be expected to be improved.

PTL 1 discloses a technique for improving the charge acceptance performance and cycle characteristics of a lead-acid battery by a battery separator coated with a carbon material.

Citation List

Patent Literature

PTL 1: WO 2015/171595 A

Non Patent Literature

NPL 1: written by Yoshinori Takeichi, Grant-in-Aid for Scientific Research Report on the Research Achievements entitled "Study on Improvement of Friction Resistance of PTFE by Addition of Carbon Black", as of March 5, 2009

Summary of Invention

Technical Problem

However, PTL 1 does not describe what kind of a coating layer is suitable from the viewpoint of improving the charge acceptance performance and cycle characteristics.

The present disclosure has been made in view of the above circumstances and an object of the present invention is to provide a separator for lead-acid batteries, which is excellent in charge acceptance performance and cycle characteristics, and a lead-acid battery using the same.

Solution to Problem

Examples of embodiments of the present disclosure are listed in the following items [1] to [18].

[1] A separator for lead-acid batteries, comprising a substrate and a layer laminated on at least one side of the substrate, wherein the layer contains a carbon material and has a porosity of 7.0% or more and 75.0% or less.

[2] The separator for lead-acid batteries according to item 1, wherein the layer has a porosity of 7.0% or more and 70.0% or less.

[3] The separator for lead-acid batteries according to item 1 or 2, wherein the layer has a pore size of 0.05 $\mu$m or more.

[4] The separator for lead-acid batteries according to any one of items 1 to 3, wherein the layer has a pore size of 1.50 $\mu$m or less.

[5] The separator for lead-acid batteries according to any one of items 1 to 4, wherein the layer has a pore size of 1.30 $\mu$m or less.

[6] The separator for lead-acid batteries according to any one of items 1 to 5, wherein the carbon material accounts for 5 parts by weight or more and 98 parts by weight or less, based on 100 parts by weight of the total weight of the layer.

[7] The separator for lead-acid batteries according to any one of items 1 to 6, wherein the carbon material contains at least one selected from the group consisting of furnace black, acetylene black and Ketjen black.

[8] The separator for lead-acid batteries according to any one of items 1 to 7, wherein the substrate is microporous.

[9] The separator for lead-acid batteries according to any one of items 1 to 8, wherein the layer has a crack area ratio of 3% or less.

[10] The separator for lead-acid batteries according to any one of items 1 to 9, wherein the layer contains a resin.

[11] The separator for lead-acid batteries according to any one of items 1 to 10, wherein the resin contains an acrylic resin.

[12] A lead-acid battery comprising a battery case, a lead oxide positive electrode, a lead negative electrode and dilute sulfuric acid, wherein the separator for lead-acid batteries according to any one of items 1 to 11 is disposed between the lead oxide positive electrode and the lead negative electrode.

[13] The lead-acid battery according to item 12, wherein the layer is disposed in a state of being in contact with the lead negative electrode.

[14] A lead-acid battery comprising a battery case, a lead oxide positive electrode, a lead negative electrode and dilute sulfuric acid, and comprising a substrate between the lead oxide positive electrode and the lead negative electrode, and comprising a layer between the substrate and the lead negative electrode, wherein
the layer contains a carbon material and has a porosity of 7.0% or more and 70.0% or less, and has a pore size of 0.05 $\mu$m or more and 1.30 $\mu$m or less.

[15] The lead-acid battery according to item 14, wherein the carbon material accounts for 5 parts by weight or more and 98 parts by weight or less, based on 100 parts by weight of the total weight of the layer.

[16] The lead-acid battery according to item 14 or 15, wherein the carbon material contains at least one selected from the group consisting of furnace black, acetylene black and Ketjen black.

[17] The lead-acid battery according to any one of items 14 to 16, wherein the substrate is microporous.

[18] The lead-acid battery according to any one of items 14 to 17, wherein the electrolytic solution contains at least one selected from the group consisting of aluminum ion, lithium ion, sodium ion and zinc ion.

Advantageous Effects of Invention

According to the present disclosure, it is possible to provide a separator for lead-acid batteries, which is excellent in charge acceptance performance and cycle characteristics, and a lead-acid battery using the same.

Brief Description of Drawings

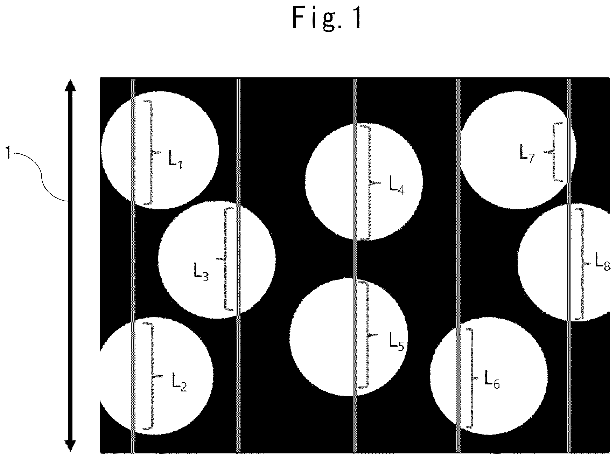

[Fig. 1] FIG. 1 is a schematic diagram showing a method for measuring a pore size.

Description of Embodiments

Examples of embodiments of the present disclosure will be described in detail below. The present disclosure is not limited to the following embodiments, and various modifications can be made without departing from the scope of the present disclosure.

**Separator for Lead-Acid Batteries**

The separator for lead-acid batteries of the present disclosure (hereinafter also simply referred to as "separator") comprises a substrate and a layer laminated on at least one side of the substrate. The layer contains a carbon material and has a porosity of 7.0% or more and 75.0% or less. The separator of the present embodiment is disposed between the positive electrode and negative electrode and can prevent electrical short circuiting between the positive electrode and negative electrode. The layer may also be laminated on both sides of the substrate, laminated over the entirety of one or both sides of the substrate, or partially laminated thereon. In the present embodiment, the condition that the surface layer is "laminated" on one or both sides of the substrate includes the case where the surface layer is directly laminated on the substrate and the case where it is indirectly laminated through another layer. A separator is usually microporous in order to allow permeation of ions. The maximum pore diameter of the separator is preferably 500 nm or less, more preferably 400 nm or less, more preferably 300 nm or less, more preferably 200 nm or less, and more preferably 150 nm or less. The lower limit of the maximum pore diameter which can be combined with these upper limits is not limited, but is, for example, 10 nm or more, 30 nm or more, or 50 nm or more.

Porosity

In the present disclosure, "porosity" refers to an area ratio (%) of pores in the cross-section of the layer in the thickness direction. Although not to be bound by theory, in the case of high porosity, sulfate ions easily diffuse inside the layer, thus making it possible to prevent sulfate ions from becoming highly concentrated near the electrodes during charging, leading to an improvement in charge acceptance performance from the viewpoint of chemical equilibrium. More specifically, when the layer has high porosity, for example, it is possible to improve the initial charge acceptance performance at 80% SoC to 105% or more compared to the initial charge acceptance performance of the substrate with no layer. From this point of view, the lower limit of the porosity is preferably 7.0% or more, more preferably 8.0% or more, more preferably 9.0% or more, more preferably 10.0% or more, more preferably 12.0% or more, more preferably 14.0% or more, more preferably 16.0% or more, more preferably 18.0% or more, more preferably 20.0%, more preferably 22.0% or more, more preferably 24.0% or more, and more preferably 26.0% or more. Although not to be bound by theory, when the layer has low porosity, the number of contact points between lead sulfate and the layer (portions other than pores) increases, thus promoting reductive decomposition of lead sulfate, leading to an improvement in charge acceptance performance. More specifically, for example, it is easier to improve the initial charge acceptance performance at 80% SoC to 105% or more compared to the initial charge acceptance performance of the substrate with no layer. From this point of view, the upper limit of the porosity which can be combined with the lower limit of the above porosity is preferably 75.0% or less, more preferably 74.0% or less, more preferably 73.0% or less, more preferably 72.0% or less, more preferably 71.0% or less, more preferably 70.0% or less, more preferably 68.0% or less, more preferably 66.0% or less, more preferably 64.0% or less, more preferably 62.0% or less, more preferably 60.0% or less, more preferably 58.0% or less, more preferably 56.0% or less, more preferably 54.0% or less, more preferably 52.0% or less, more preferably 50.0% or less, more preferably 48.0% or less, more preferably 46.0% or less, more preferably 44.0% or less, more preferably 42.0% or less, more preferably 40.0% or less, more preferably 38.0% or less, and more preferably 35.0% or less.

Pore Size

In the present disclosure, "pore size" refers a size ($\mu$m) of pores in the cross-section of the layer in the thickness direction. Although not to be bound by theory, when the porosity within the layer is the same, the larger the pore size, the higher the conductivity derived from the carbon material within the layer surface, thus making it possible to promote reductive decomposition of lead sulfate during charging, leading to an improvement in cycle voltage. More specifically, it is possible to maintain the discharge end voltage after 510 cycles of a cycle test at 1,810 (mV) or higher. From the viewpoint of maintaining high discharge end voltage, the lower limit of the pore size is preferably 0.05 $\mu$m or more, more preferably 0.06 $\mu$m or more, more preferably 0.07 $\mu$m or more, more preferably 0.08 $\mu$m or more, more preferably 0.09 $\mu$m or more, more preferably 0.10 $\mu$m or more, more preferably 0.12 $\mu$m or more, more preferably 0.14 $\mu$m or more, more preferably 0.15 $\mu$m or more, more preferably 0.16 $\mu$m or more, more preferably 0.18 $\mu$m or more, more preferably 0.20 $\mu$m or more, more preferably 0.22 $\mu$m or more, more preferably 0.24 $\mu$m or more, more preferably 0.26 $\mu$m or more, more preferably 0.28 $\mu$m or more, more preferably 0.30 $\mu$m or more, more preferably 0.32 $\mu$m or more, and more preferably 0.35 $\mu$m or more. Although not to be bound by theory, when the porosity is the same, the smaller the pore size, the more the number of pores increases, so that diffusion of sulfate ions proceeds uniformly and smoothly, thus promoting reductive decomposition of lead sulfate and maintaining high cycle voltage. More specifically, it is possible to improve the discharge end voltage after 510 cycles of a cycle test to 1,810 (mV) or higher. From this point of view, the upper limit of the pore size which can be combined with the lower limit of the above pore size is preferably 1.50 $\mu$m or less, more preferably 1.48 $\mu$m or less, more preferably 1.46 $\mu$m or less, more preferably 1.44 $\mu$m or less, more preferably 1.42 $\mu$m or less, more preferably 1.40 $\mu$m or less, more preferably 1.38 $\mu$m or less, more preferably 1.36 $\mu$m or less, more preferably 1.34 $\mu$m or less, more preferably 1.32 $\mu$m or less, more preferably 1.30 $\mu$m or less, more preferably 1.28 $\mu$m or less, more preferably 1.26 $\mu$m or less, more preferably 1.24 $\mu$m or less, more preferably 1.22 $\mu$m or less, more preferably 1.20 $\mu$m or less, more preferably 1.15 $\mu$m or less, more preferably 1.10 $\mu$m or less, more preferably 1.05 $\mu$m or less, more preferably 1.00 $\mu$m or less, more preferably 0.90 $\mu$m or less, more preferably 0.80 $\mu$m or less, more preferably 0.70 $\mu$m or less, more preferably 0.60 $\mu$m or less, and more preferably 0.50 $\mu$m or less.

Cracks

In the present disclosure, "cracks" are spatial separations which break the continuity of the smooth surface of the layer in a separator comprising a layer on the substrate, and refer to groove-like structures formed in the thickness direction (z-axis direction) from the layer surface (x-axis and y-axis plane). The groove-like structure has a continuous structure from the surface of a cracked layer to the interface between the cracked layer and the substrate, and easily forms electrical insulation by spatially separating the layer from adjacent layer across the cracks.

Cracks reduce the discharge end voltage during cycle. Although not to be bound by theory, it is believed that the reason for this is as follows. The above layer functions as auxiliary conductive paths of an electrode in the in-plane direction of the separator, thus promoting the decomposition reaction of lead sulfate, leading to an improvement in cycle characteristics. When the layer has high crack area ratio, the formation of conductive paths is partially restricted, leading to deterioration of cycle characteristics and reduction of the discharge end voltage during cycle. Therefore, the crack area ratio is preferably 3% or less, more preferably 2% or less, or 1% or less. The lower limit of the crack area ratio may be 0% or more, or more than 0%. The crack area ratio refers to an area ratio (%) of cracks in the surface of the layer. From the viewpoint of suppressing cracks, it is preferable to increase the porosity of the layer, and the lower limit which can be combined with the upper limit of the porosity is preferably 7.0% or more, more preferably 8.0% or more, more preferably 9.0% or more, more preferably 10.0% or more, more preferably 12.0% or more, more preferably 14.0% or more, more preferably 16.0% or more, more preferably 18.0% or more, more preferably 20.0%, more preferably 22.0% or more, more preferably 24.0% or more, and more preferably 26.0% or more.

From the viewpoint of suppressing peeling and falling off of the layer from the separator and uniformly forming a layer on the substrate surface, the thickness of the layer is preferably 50 $\mu$m or less. From the viewpoint of peeling of the layer and ion permeation, the upper limit of the thickness of the layer is preferably 45 $\mu$m or less, 40 $\mu$m or less, or 35 $\mu$m or less. The lower limit which can be combined with the upper limit of the layer thickness is preferably 0.05 $\mu$m or more, 0.06 $\mu$m or more, 0.07 $\mu$m or more, 0.08 $\mu$m or more, 0.09 $\mu$m or more, 0.10 $\mu$m or more, from the viewpoint of lowering the electrical resistance in the in-plane direction of the layer.

Carbon Material

The layer contains a carbon material from the viewpoint of the conductivity. Examples of the carbon material include graphite, active carbon, carbon black, carbon clusters such as graphene and fullerene, carbon monolithic materials and mixtures thereof. Of the above-mentioned carbon materials, from the viewpoint of increasing the porosity of the layer, carbon particles having large primary particle size and/or large DBP absorption amount are preferable, at least one selected from the group consisting of furnace black, acetylene black, Ketjen black, graphite and carbon nanotubes is more preferable, and at least one selected from the group consisting of furnace black, acetylene black and Ketjen black is still more preferable.

The carbon material is preferably carbon particles from the viewpoint of uniformly dispersing within the layer. From the viewpoint of forming a layer having a pore size within the above range, the primary particle diameter of the carbon particles is preferably 5 nm or more, more preferably 6 nm or more, more preferably 7 nm or more, more preferably 8 nm or more, more preferably 9 nm or more, more preferably 10 nm or more, more preferably 12 nm or more, more preferably 14 nm or more, more preferably 16 nm or more, more preferably 18 nm or more, more preferably 20 nm or more, more preferably 22 nm or more, more preferably 25 nm or more. The upper limit which can be combined with the lower limit of the primary particle diameter of the carbon particles is not limited, but is preferably 500 nm or less, and more preferably 400 nm or less, or may be 300 nm or less, 200 nm, 100 nm or less.

The DBP absorption amount of carbon particles is an index showing how much butyl phthalate (DBP) is absorbed into particle pores of the carbon material, and the more the structure of the carbon material is developed, the more the DBP absorption amount increases. In this case, "structure" means the length of the connection of carbon particles. To form a coating layer having a porosity within the above range, when the primary particle diameter of carbon particles is X [nm] and the DBP absorption amount of the carbon particles is Y [mL/100 g], it is preferable to satisfy: Y > -0.08X+20. When the primary particle size is large, pores are easily created between the particles, and when the DBP absorption amount is large, a structure derived from the three-dimensional structure of the primary particles develops, leading to high porosity.

From the viewpoint of uniformly dispersing the carbon material within the layer, the carbon material is preferably carbon particles, and median particle size (d50) of the carbon particles is preferably 0.01 $\mu$m to 50 $\mu$m, 0.01 $\mu$m to 30 $\mu$m, or 0.01 $\mu$m to 10 $\mu$m, from the viewpoint of easy formation of uniform layer thickness.

From the viewpoint of forming a conductive network within the layer to promote reductive decomposition of lead sulfate, leading to an improvement in charge acceptance performance, the layer preferably contains 5 parts by weight or more of the carbon material, based on 100 parts by weight of the total weight of the above layer. From the viewpoint of forming a conductive network within the layer to improve the charge acceptance performance, the lower limit of the amount of the carbon material is more preferably 6 parts by weight or more, still more preferably 7 parts by weight or more, more preferably 8 parts by weight or more, more preferably 9 parts by weight or more, still more preferably 10 parts by weight or more, still more preferably 12 parts by weight or more, still more preferably 14 parts by weight or more, still more preferably 16 parts by weight or more, still more preferably 18 parts by weight or more, still more preferably 20 parts by weight or more, still more preferably 25 parts by weight or more, still more preferably 30 parts by weight or more, still more preferably 35 parts by weight or more, still more preferably 40 parts by weight or more, still more preferably 45 parts by weight or more, still more preferably 50 parts by weight or more, still more preferably 55 parts by weight or more, and still more preferably 60 parts by weight or more. Although not to be bound by theory, from the viewpoint of suppressing peeling of the layer from the substrate and falling off of the carbon material from the layer, and uniformly forming a uniform conductive layer on the substrate surface, the upper limit which can be combined with the lower limit of the proportion of the carbon material in the above layer is preferably 98 parts by weight or less, more preferably 97 parts by weight or less, more preferably 96 parts by weight or less, more preferably 95 parts by weight or less, more preferably 94 parts by weight or less, more preferably 93 parts by weight or less, more preferably 92 parts by weight or less, more preferably 91 parts by weight or less, more preferably 90 parts by weight or less, more preferably 85 parts by weight or less, more preferably 80 parts by weight or less, more preferably 75 parts by weight or less, and more preferably 70 parts by weight or less, based on 100 parts by weight of the total weight of the above layer.

Surfactant

From the viewpoint of uniformly dispersing the carbon material in the layer to form a uniform conductive path, the layer may contain a surfactant. It is possible to use, as the surfactant, various surfactants, for example, anionic surfactants such as sulfate, phosphate, carboxylic acid and sulfonate surfactants, cationic surfactants such as quaternary ammonium salt and amidoamine surfactants, amphoteric surfactants such as alkylbetaine, amidobetaine and amine oxide surfactants, nonionic surfactants such as ether, fatty acid ester and alkyl glucoxide surfactants, and polymeric surfactants such as polyacrylic acid, polyacrylate, polysulfonate, polynaphthalenesulfonate, polyalkylenepolyamine alkylene oxide, polyalkylenepolyimine alkylene oxide, polyvinyl picolidone and cellulose surfactants. These surfactants may be used alone or in combination of two or more thereof for the purpose of preventing agglomeration of carbon materials. The surfactant is not limited to these surfactants, as long as the effect of uniformly dispersing the primary materials of the layer can be obtained. The surfactant preferably contains at least one selected from the group consisting of ionic surfactants, i.e., anionic surfactants, cationic surfactants and amphoteric surfactants.

The amount of the surfactant is preferably 1 part by weight to 95 parts by weight, 5 parts by weight to 60 parts by weight, 5 parts by weight to 40 parts by weight, or 10 to 30 parts by weight, based on 100 parts by weight of the total weight of the above layer.

Resin

The layer a preferably contains a resin from the viewpoint of enhancing the binding properties of the carbon material within the layer and suppressing peeling of the layer from the substrate. Examples of the resin include styrene-based resins, acrylic/urethane-based resins, acrylic/styrene-based resins, vinyl acetate/acrylic resins, styrene/butadiene-based resins, acrylonitrile/butadiene-based resins, natural rubber-based resins, polybutadiene-based resins (BR resins), methyl methacrylate/butadiene-based resins, 2-vinylpyridine/styrene/butadiene-based resins (VP resins), chloroprene resins (CR resins), polyolefin-based resins such as polyethylene, polypropylene, polybutene and copolymers thereof, modified polyolefin-based resins obtained by chlorinating or acid-modifying the polyolefin-based resins, fluorinated resins such as polyvinylidene fluoride or polytetrafluoroethylene, fluorinated rubber binders such as vinylidene fluoride-hexafluoropropylene-tetrafluoroethylene copolymer or ethylene-tetrafluoroethylene copolymer, (meth)acrylate-styrene-butadiene copolymer resins and their hydrogenated forms, polyvinyl alcohol resins, and polyvinyl alcohol/polyacetate copolymer resins.

Of the above-mentioned resins, acrylic resins or styrene-based resins are preferable from the viewpoint of improving the bonding property and heat resistance, and acrylic resins are more preferable. As used herein, "acrylic resin" includes acrylic copolymer resins such as acrylic/urethane-based resins, acrylic/styrene-based resins, acrylic/styrene-/butadiene-based resins and vinyl acetate/acrylic resins, as well as polymers of acrylic resins. As used herein, "styrene-based resin" includes styrene-based copolymer resins such as acrylic/styrene-based resins, styrene/butadiene-based resins, acrylic/styrene/butadiene-based resins and 2-vinylpyridine/styrene/butadiene-based resins, as well as polymers of styrene resins.

The amount of the resin is preferably 1 part by weight or more, based on 100 parts by weight of the total weight of the above layer, from the viewpoint of enhancing the binding property of the carbon material in the layer to prevent peeling of the layer from the substrate. The lower limit of the amount of resin is preferably 5 parts by weight or more, or 10 parts by weight or more, from the viewpoint of enhancing the binding property. The upper limit of the amount of resin is preferably 95 parts by weight or less, 70 parts by weight or less, or 40 parts by weight or less, from the viewpoint of ion permeation.

These resins may also contain one or more other components in the compositions mentioned above. The resin is not limited to one type, and plural types may be used in combination. For example, a combination of an acrylic resin and a styrene-based resin may be used.

Thickener

The layer preferably contains a thickener from the viewpoint of suppressing peeling of the layer from the substrate to uniformly form the layer on the substrate surface. Examples of the thickener include synthetic polymers such as polyethylene glycol, polypropylene glycol, urethane-modified polyether, polyacrylic acid, polyvinyl alcohol and vinyl methyl ether-maleic anhydride copolymers; cellulose derivatives such as carboxymethyl cellulose (CMC), carbomethoxy cellulose, hydroxyethyl cellulose and hydroxyethyl cellulose; natural polysaccharides such as xanthan gum, diutan gum, welan gum, gellan gum, guar gum, carrageenan gum and pectin; and starches such as dextrin and pregelatinized starch. The thickener can be appropriately selected from the viewpoint of slurry viscosity, pot life and particle size distribution. These thickeners can be used alone, or two or more thereof can be used in combination.

The amount of the thickener is preferably 0.1 part by weight to 50 parts by weight, and more preferably 1 part by weight to 20 parts by weight, based on 100 parts by weight of the total weight of the above layer.

Substrate

The substrate is preferably microporous in order to allow permeation of ions. The maximum pore diameter of the substrate is preferably 500 nm or less, more preferably 400 nm or less, more preferably 300 nm or less, more preferably 200 nm or less, and more preferably 150 nm or less. The lower limit for the maximum pore diameter which can be combined with the upper limit is not limited, but is, for example, 10 nm or more, 30 nm or more, or 50 nm or more.

The substrate is not particularly limited, it is microporous in order to allow permeation of ions, and the substrate is preferably a microporous membrane produced from natural or synthetic materials, for example, thermoplastic polymers such as polyvinyl and polyolefin, thermosetting polymers such as phenolic resins, natural or synthetic rubbers, and rubber materials such as latex, fibrous materials such as synthetic wood pulp (SWP), glass fibers, synthetic fibers and cellulose fibers, and combinations thereof, more preferably a microporous membrane produced from a thermoplastic polymer, and still more preferably microporous membrane produced from polyethylene. These substrates preferably contain inorganic powder such as silica from the viewpoint of enhancing the hydrophilicity, and preferably contain mineral oil from the viewpoint of enhancing the oxidation resistance. The thermoplastic polymers include basically any acid-resistant thermoplastic material suitable for lead-acid battery applications, and preferred thermoplastic polymers include, for example, polyvinyl, polyolefins and the like. Examples of polyvinyl include polyvinyl chloride (PVC). Examples of polyolefins include polyethylene and polypropylene. Examples of polyethylene include ultra-high molecular weight polyethylene (UHMWPE).

**Lead-Acid Battery**

The lead-acid battery of the present disclosure is a lead-acid battery comprising a battery case, a lead oxide positive electrode, a lead negative electrode and dilute sulfuric acid, and the separator of the present disclosure is disposed between the lead oxide positive electrode and the lead negative electrode. By using the separator for lead-acid batteries of the present disclosure in a lead-acid battery, the charge acceptance performance can be enhanced. From the viewpoint of efficiently performing reductive decomposition of lead sulfate on the surface of the negative electrode during charging, it is preferable that the above layer is brought into opposing contact with the negative electrode. The positive electrode grid constituting the positive electrode may be lead or a lead alloy, and the positive electrode active material may be lead oxide, for example, lead dioxide. The negative electrode grid constituting the negative electrode may be lead or a lead alloy, the negative electrode active material may be lead, and the lead negative electrode itself may be, for example, in the form of a spongy shape. Furthermore, the active materials of these positive and negative electrodes may contain 50% by weight or less of metal elements other than lead or a lead alloy. Dilute sulfuric acid is sulfuric acid having a specific gravity of 1.1 to 1.4, and the electrolytic solution may contain additives. The additive may contain, for example, aluminum ions from the viewpoint of suppressing sulfation. Other additives include metal ions such as lithium ions and sodium ions.

The lead-acid battery of the present disclosure is a lead-acid battery comprising a battery case, a lead oxide positive electrode, a lead negative electrode and dilute sulfuric acid, and a substrate is provided between the lead oxide positive electrode and the lead negative electrode, a layer is formed between the substrate and the lead negative electrode, the layer contains a carbon material, the layer has a porosity of 7.0% or more and 70.0% or less, and a pore size is preferably 0.05 $\mu$m or more and 1.30 $\mu$m or less. From the viewpoint of efficiently reducing lead sulfate of the negative electrode during charging, it is preferable that the above layer faces the negative electrode. It is possible to use, as an electrolytic solution, an electrolytic solution containing dilute sulfuric acid. The positive electrode grid constituting the positive electrode may be lead or a lead alloy, and the positive electrode active material may be lead oxide, for example, lead dioxide. The negative electrode grid constituting the negative electrode may be lead or a lead alloy, and the negative electrode active material may be lead, and the lead negative electrode itself may be, for example, in the form of a spongy shape. The active materials of these positive and negative electrodes may also contain 50% by weight or less of metal elements other than lead or a lead alloy. Dilute sulfuric acid is sulfuric acid having a specific gravity of 1.1 to 1.4, and the electrolytic solution may contain additives. The additive may contain, for example, aluminum ions from the viewpoint of suppressing sulfation. Other additives include metal ions such as lithium ions, sodium ions and zinc ions.

By providing the separator of the present disclosure between the positive electrode and the negative electrode, it is possible to obtain a lead-acid battery with excellent initial charge acceptance performance. The separator for lead-acid batteries of the present disclosure can be used for both an open-type lead-acid battery and a control valve-regulated lead-acid battery.

**Method for Producing Separator for Lead-Acid Batteries**

Fabrication of Substrate

A method for producing a substrate will be described below by way of a substrate made of polyolefin, for example, ultra-high molecular weight polyethylene as an example, but the substrate is not limited to the substrate obtained by the following production method, as long as a layer of the present disclosure is formed thereon.

The method for producing a substrate comprises a step of preparing a thermoplastic polymer, for example, ultrahigh molecular weight polyethylene (hereinafter referred to as "UHMWPE"); a step of preparing a particulate filler; a step of preparing a processing plasticizer which is liquid at room temperature (25°C); a step of mixing the UHMWPE, particulate filler and processing plasticizer to form a mixture; a step of passing the mixture through a die, for example, a slot die or inflation die for extrusion into a sheet; and an extraction step in which the plasticizer is partially or totally removed from the sheet to form a microporous matrix. After the step of forming the sheet and before the extraction step, the sheet may be further processed by a casting method, calendering method or inflation method onto a cooling roller. The sheet processed by the casting method or calendering method can be then subjected to the extraction step to partially or totally remove the plasticizer, thus forming a microporous matrix.

The microporous matrix obtained by the above method contains UHMWPE, a plasticizer (when partially extracted) and a thoroughly matrix-dispersed particulate filler. The particulate filler preferably accounts for 5% by weight to 95% by weight of the microporous matrix. As used herein, the term "microporous matrix" refers to a structure having an interconnected porous network in which the entire microporous matrix is connected by the constituent materials. The pores preferably account for 25% to 90% of the volume of the microporous matrix. The method for producing a substrate may further comprise, after the extraction step, a step of stretching the microporous matrix; and a step of calendering the stretched microporous matrix to produce a final microporous material. Calendering enables formation of a substrate with excellent dimensional stability even at high temperature.

Formation of Layer

The layer may be directly laminated on the substrate surface, or indirectly laminated thereon as a laminate layer of a substrate comprising a laminate consisting of a single layer or multiple layers. In the latter case, the layer may be introduced as a final step of the process of laminating a single layer or multiple layers on the substrate, or after introducing the layer into a portion of the laminate material, the substrate and the layer may be overlapped and introduced.

The method for forming the layer laminated on the substrate comprises a step of mixing a material for forming the layer with a solvent; a step of introducing the mixture of materials to the surface of the substrate or laminate; and a step of drying the mixture to remove the solvent. The materials are preferably homogenized in a solvent to form a mixture. The solvent may be either an aqueous solvent or an organic solvent. The method for introduction includes applying the mixture in a wet state to the surface of a substrate or laminate using, for example, a die coating method or a gravure coating method. The substrate or laminate coated with the mixture may be subjected to further processing such as pressing. From the viewpoint of suppressing cracks, it is preferable to increase the porosity. From this point of view, the lower limit of the porosity is preferably 7.0% or more, more preferably 8.0% or more, more preferably 9.0% or more, more preferably 10.0% or more, more preferably 12.0% or more, more preferably 14.0% or more, more preferably 16.0% or more, more preferably 18.0% or more, more preferably 20.0%, more preferably 22.0% or more, more preferably 24.0% or more, and more preferably 26.0% or more.

**Method for Producing Lead-Acid Battery**

A lead-acid battery comprising the separator of the present disclosure can be produced by placing each member in a battery container so that the separator of the present disclosure is disposed between a lead oxide positive electrode and a lead negative electrode, and then injecting dilute sulfuric acid as an electrolytic solution. From the viewpoint of efficiently performing reductive decomposition of lead sulfate on the surface of the negative electrode during charging, it is preferable that the above layer is brought into opposing contact with the negative electrode. The form of the separator for lead-acid batteries may be determined so as to match the structural members of the lead-acid battery. The positive electrode grid constituting the positive electrode may be lead or a lead alloy, and the positive electrode active material may be lead oxide, for example, lead dioxide. The negative electrode grid constituting the negative electrode may be lead or a lead alloy, the negative electrode active material may be lead, and the lead negative electrode itself may be, for example, in the form of a spongy shape. For the active materials of these positive and negative electrodes, 30% by weight or less of other metal elements may be contained in the above composition. Dilute sulfuric acid is sulfuric acid having a specific gravity of 1.1 to 1.4, and the electrolytic solution can contain additives.

A lead-acid battery comprising the separator of the present disclosure can be produced by placing each member in a battery container so that a substrate is provided between a lead oxide positive electrode and a lead negative electrode, and a layer is disposed between the substrate and the lead negative electrode, and then injecting dilute sulfuric acid as an electrolytic solution. The above layer may be disposed on either the substrate surface or negative electrode surface. It is possible to use, as the method for disposing the layer on the surface of the substrate, the method described in aforementioned "Formation of Layer". The method for disposing on the surface of the negative electrode comprises a step of mixing a material for forming the layer with a solvent; a step of introducing the mixture of materials to the surface of the negative electrode; and a step of drying the mixture to remove the solvent. The materials are preferably homogenized in a solvent to form a mixture. The solvent may be either an aqueous solvent or an organic solvent. The method for introduction includes applying the mixture in a wet state to the surface of the negative electrode using, for example, a die coating method or a gravure coating method. The negative electrode coated with the mixture may be subjected to further processing such as pressing. The form of the separator for lead-acid batteries may be determined so as to match the structural members of the lead-acid battery. The positive electrode grid constituting the positive electrode may be lead or a lead alloy, and the positive electrode active material may be lead oxide, for example, lead dioxide. The negative electrode grid constituting the negative electrode may be lead or a lead alloy, the negative electrode active material may be lead, and the lead negative electrode itself may be, for example, in the form of a spongy shape. For the active materials of these positive and negative electrodes, 30% by weight or less of other metal elements may be contained in the above composition. Dilute sulfuric acid is sulfuric acid having a specific gravity of 1.1 to 1.4, and the electrolytic solution can contain additives.

By using the separator comprising the layer of the present disclosure for a lead-acid battery, sulfate ions easily diffuse inside the layer to suppress higher concentration of sulfate ions inside the layer during charging, and as a result, the charging reaction can be promoted from the viewpoint of chemical equilibrium, leading to an improvement in charge acceptance performance. Therefore, it is preferable to dispose the separator of the present disclosure between the positive electrode and the negative electrode of the lead-acid battery. Although not particularly limited, it is preferable to dispose the layer on the negative electrode side of the separator from the viewpoint of improving the charge acceptance performance of the negative electrode. The separator for lead-acid batteries of the present disclosure can be used for both an open-type lead-acid battery and a control valve-regulated lead-acid battery.

Description of Embodiments

Examples of the present disclosure will be described in detail below; however, the scope of the present disclosure is not limited to the following Examples.

**Measurement and Evaluation Method**

Primary Particle Size of Carbon Material

The primary particle size of carbon particles was calculated from the nitrogen adsorption specific surface area obtained by the BET method. It was determined by d = g/A, where the nitrogen adsorption specific surface area of carbon particles is A $[m^2/g]$, the constant is g $[nm \cdot m^2/g]$, and the primary particle size is d [nm]. As the constant, g = 3922 $[nm \cdot m^2/g]$ was used. The above calculation was performed with reference to NPL 1 (written by Yoshinori Takeichi, Grant-in-Aid for Scientific Research Report on the Research Achievements entitled "Study on Improvement of Friction Resistance of PTFE by Addition of Carbon Black", as of March 5, 2009).

DBP Oil Absorption Amount of Carbon Material

The DBP absorption amount of the carbon material was calculated at a maximum torque of 70% in accordance with JIS K 6217-4

Median Particle Size (d50) of Carbon Material

The median particle size (d50) indicates the median size of particles when the cumulative volume of particles is 50%. In the measurement of the median particle size (d50), a mixture obtained by dispersing a carbon material and an ionic surfactant in water, followed by mixing was used. The median particle size was measured using an MT3300EXII (optical bench) and an SDC (sample circulator) manufactured by Microtrac Bell. MicrotracII was used as the measuring software. The measuring conditions and analysis conditions are as follows.

Measuring Conditions

Set zero time: 10
Measuring time: 10
Measuring frequency: 1

Analysis Conditions

Permeability: Permeable
Particle refractive index: 2.00
Form: Non-spherical
Solvent refractive index: 1.333
Distribution: volume

Porosity of Layer

The porosity of the layer can be determined by observation of the cross-section in the thickness direction of the above layer using a scanning electron microscope (SEM) S-4800 manufactured by Hitachi High-Tech Corporation. More specifically, a smooth cross-section of a separator for lead-acid batteries was fabricated by BIB processing, and then osmium (Os) coating was applied to the surface of the smooth cross-section as a conduction treatment. In the BIB processing, SM-09010CP manufactured by JEOL Ltd. was used. The accelerating voltage was 3.5 kV. When observing the porosity of the separator removed from a completed lead-acid battery, the following operations is performed before observing the cross-section using an electron microscope. (1) The separator thus removed is washed with distilled water. (2) The pH of the washing water is measured, and washing is stopped when the pH becomes neutral to weakly acidic. However, in cases (1) and (2), no physical scrubbing or the like is performed. (3) The separator is air dried, but rapid drying such as hot air drying is not performed.
The porosity of the above layer was determined by obtaining a cross-sectional SEM image of the separator for lead-acid batteries at a magnification of 30,000 times using the above-mentioned method, and analyzing the SEM image using image analysis software (Winroof v6.1, manufactured by Mitani Shoji Co., Ltd.). The measurement area was specified to be 0.5 $\mu$m in the thickness direction of the layer and 1 $\mu$m in the in-plane direction of the separator, and pores in the measurement area was identified by binarization processing, and then the porosity (%) was determined by calculating the area ratio of the pores in the area of the entire measurement area. If a measurement area of the above size (0.5 $\mu$m in thickness direction $\times$ 1 $\mu$m in in-plane direction) cannot be secured due to the sample shape, a measurement area of dimensions as close as possible to the above size is specified in accordance with the sample shape. The unit of the porosity is %.

Pore Size of Layer

The pore size of the layer was determined by observation of the cross-section in the thickness direction of the above layer using a scanning electron microscope (SEM) S-4800 manufactured by Hitachi High-Tech Corporation. More specifically, a smooth cross-section of a layer of the separator for lead-acid batteries was fabricated by broad ion beam (BIB) processing, and then osmium (Os) coating was applied to the surface of the smooth cross-section as a conduction treatment. In the BIB processing, SM-09010CP manufactured by JEOL Ltd. was used. The accelerating voltage was 3.5 kV. When observing the porosity of the separator removed from a completed lead-acid battery, the following operations is performed before observing the cross-section using an electron microscope. (1) The separator thus removed is washed with distilled water. (2) The pH of the washing water is measured, and washing is stopped when the pH becomes neutral to weakly acidic. However, in cases (1) and (2), no physical scrubbing or the like is performed. (3) The separator is air dried, but rapid drying such as hot air drying is not performed.

The pore size of the above layer was determined by obtaining a cross-sectional SEM image of the separator for lead-acid batteries at a magnification of 30,000 times using the above-mentioned method, and measuring the length in the thickness direction, followed by analysis. The measurement area was specified to be 0.5 $\mu$m in the thickness direction of the layer and 1 $\mu$m in the in-plane direction of the separator. As schematically shown in Fig. 1, lines are drawn in the film thickness direction (1) at 100 arbitrarily selected locations in the measurement area, and the length L ($\mu$m) of the portion where the line overlaps with each pore was calculated and set as $L_1$, $L_2$···, $L_N$. The pore size ($\mu$m) was calculated by the following formula:

$$\text{Pore size} = (L_1{}^2 + L_2{}^2 + \cdots + L_N{}^2)/(L_1 + L_2 + \cdots + L_N)$$

If a measurement area of the above size (0.5 $\mu$m in thickness direction $\times$ 1 $\mu$m in in-plane direction) cannot be secured due to the sample shape, a measurement area of dimensions as close as possible to the above size is specified in accordance with the sample shape. The unit of the pore size is $\mu$m.

Crack Area Ratio of Layer

For observation and measurement of the crack area ratio, a tabletop microscope TM3000 manufactured by Hitachi High-Tech Corporation was used. When observing cracks of a separator removed from a lead-acid battery, the following operations are performed before observation with a microscope. (1) The separator thus removed is washed with distilled water. (2) The pH of the washing water is measured, and washing is stopped when the pH becomes neutral to weakly acidic. However, in cases (1) and (2), no physical scrubbing or the like is performed. (3) The separator is air dried, but rapid drying such as hot air drying is not performed.

The surface of the layer of the separator was observed by SEM using the method mentioned above to obtain a SEM image at a magnification of 500 times, and then the SEM image was analyzed using image analysis software (Winroof v6.1, manufactured by Mitani Shoji Co., Ltd.). The measurement area was specified to be 240 $\mu$m $\times$ 320 $\mu$m, and cracks in the measurement area were identified by binarization processing, and then the crack area ratio (%) was determined by calculating the area ratio of the cracks in the total area of the measurement area. If a measurement area of the above size (240 $\mu$m $\times$ 320 $\mu$m) cannot be secured due to the sample shape, a measurement area of dimensions as close as possible to the above size is specified in accordance with the sample shape. The unit of the crack area ratio is %.

Charge Acceptance Performance of Lead-Acid Battery

Using a polycarbonate battery case, two lead oxide positive electrodes, one lead negative electrode, and a separator to be measured, dilute sulfuric acid having a specific gravity of 1.28 was injected as an electrolytic solution to fabricate a lead-acid battery (2V unit cell). Using this lead-acid battery, a charge acceptance performance test of the lead-acid battery at PSoC was performed. In this test, a charge/discharge test device ACD-01 G-Version manufactured by Aska Electronic Co., Ltd. was used. The charge acceptability performance was measured before performing a charge/-discharge cycle test. Specifically, charging and discharging were performed at 25°C under the following conditions, and the charging current value was measured.

(1) Charge (100% SoC): Constant-current/constant-voltage charging for 24 hours at a current rate of 0.25 C (5 $\times$ 120), voltage value of 2.67 V.
(2) Discharge (90% SoC): Constant-current discharge for 60 minutes at a current rate of 0.1 C (2 $\times$ 120).
(3) Charge: Constant-current/constant-voltage charging for 60 seconds at a current rate of 2.0 C (40 $\times$ 120), voltage value of 2.47 V.
(4) Discharge (80% SoC): Constant-current discharge for 60 minutes at a current rate of 0.1 C (2 $\times$ I20).
(5) Charge: Constant-current/constant-voltage charging for 60 seconds at a current rate of 2.0 C (40 $\times$ I20), voltage value of 2.47 V.
(6) Discharge (70% SoC): Constant-current discharge for 60 minutes at a current rate of 0.1 C (2 $\times$ I20).
(7) Charge: Constant-current/constant-voltage charging for 60 seconds at a current rate of 2.0 C (40 $\times$ I20), voltage value of 2.47 V.
(8) Discharge (60% SoC): Constant-current discharge for 60 minutes at a current rate of 0.1 C (2 $\times$ I20).
(9) Charge: Constant-current/constant-voltage charging for 60 seconds at a current rate of 2.0 C (40 $\times$ I20), voltage

value of 2.47 V.

In charging at 80% SoC, the current value at 60 seconds was recorded, and the value obtained by dividing the current value [A] by the electrode capacity [Ah] was determined as the charge acceptance performance. In the same manner, the charge acceptance performance of the substrate was measured using the same substrate with no layer instead of the separator to be measured. When the charge acceptance performance thus determined is A [A/Ah] and the charge acceptance performance of the substrate is B [A/Ah], the initial DCA ratio was determined by the following formula:

$$\text{Initial DCA ratio} = A[A/Ah]/B[A/Ah]$$

Electrode Capacity of Lead-Acid Battery

The electrode capacity was measured before performing a charge/discharge cycle test. Specifically, after initial charging shown in case (10) below was performed at 25°C, cycling was paused at completion of 5 cycles, one cycle consisting of cases (11) and (12). At this time, the discharge capacity at the 5th cycle was used as the electrode capacity when determining DCA.

(10) Initial charge: Constant-current/constant-voltage charging for 24 hours at a current rate of 0.1 C (2 × I20), voltage value of 2.67 V.
(11) Discharge: Constant-current discharging at a current rate of 0.05C (1 × I20), end conditions: voltage value of 1.75 V.
(12) Charge: Constant-current/constant-voltage charging for 24 hours at a current rate of 0.1C (2 × I20), voltage value of 2.47 V.

Cycle Test of Lead-Acid Battery

The specific conditions for the charge-discharge cycle test are as follows: after initial discharging shown in case (13) below on a fully charged lead-acid battery at 25°C, cycling was paused at completion of 510 cycles, one cycle consisting of cases (14) and (15). At this time, the discharge end voltage after 510 cycles was determined as the end voltage during cycle.

(13) Initial charge: Constant-current discharging for 150 minutes at a current rate of 0.2C (4 × I20)
(14) Charge: Constant-current/constant-voltage charging for 40 minutes at a current rate of 0.35C (7 × I20), voltage value of 2.4 V.
(15) Discharge: Constant-current/constant-voltage discharging for 30 minutes at a current rate of 0.35C (7 × I20), voltage value of 1.75 V.

Example 1

A polyethylene separator (manufactured by Daramic) was used as the substrate. In the formation of the pore-containing layer, a slurry was first prepared. Carbon black, an ionic surfactant, an acrylic resin and a thickener were dispersed and mixed as solid in water to prepare a slurry having a solid content concentration of 1% by weight. At this time, the slurry was formulated so as to include 65.7 parts by weight of carbon black (furnace black) having a primary particle size of 6 nm and a DBP oil absorption amount of 310 mL/100 g, 19.7 parts by weight of an ionic surfactant, 13.2 parts by weight (in terms of solid content) of an acrylic resin (water-based latex) and 1.3 parts by weight of a thickener based on 100 parts by weight of the entire solid content (corresponding to the total weight of the resulting layer) in the slurry. Using an applicator, the slurry was manually applied (hand-coated) onto one side of the substrate and dried in an oven at 80°C for 5 minutes to obtain a separator comprising the above layer on one side of the substrate. At this time, the applicator gap (clearance formed between the separator and the applicator) was 45 μm. The separator thus obtained was cut into a rectangle, folded in half along the long side so that the pore-containing layer was on the inside, and both ends of the separator were sealed in the direction perpendicular to the folded side, leaving one side open to fabricate a bag-shaped separator. A negative electrode was inserted into the bag-shaped separator to fabricate the lead-acid battery in a state where the layer is in contact with the negative electrode. The results obtained by the evaluation methods mentioned above are shown in Table 1.

Example 2

Production was performed in the same manner as Example 1, except that regarding the slurry, carbon black in Example 1 was changed to carbon black (furnace black) having the primary particle size and DBP oil absorption amount shown in Table 1.

Example 3

Production was performed in the same manner as Example 1, except that regarding the slurry, carbon black of Example 1 was changed to carbon black (furnace black) having the primary particle size and DBP oil absorption amount shown in Table 1, the amount of carbon black was changed from 65.7 parts by weight to 15.4 parts by weight, the amount of the ionic surfactant was changed to 4.6 parts by weight, the amount of the acrylic resin was changed to 80 parts by weight (in terms of solid content), and the amount of the thickener was changed to 0 part by weight.

Example 4

Production was performed in the same manner as Example 1, except that regarding the slurry, the amount of carbon black of Example 1 was changed from 65.7 parts by weight to 95 parts by weight, the amount of the ionic surfactant was changed to 4 parts by weight, and the amount of the acrylic resin was changed to 0 part by weight (in terms of solid content).

Example 5

Production was performed in the same manner as Example 1, except that regarding the slurry, carbon black of Example 1 was changed to Ketjen black having the primary particle size and DBP oil absorption amount shown in Table 1.

Example 6

Production was performed in the same manner as Example 1, except that regarding the slurry, carbon black of Example 1 was changed to acetylene black having the primary particle size and DBP oil absorption amount shown in Table 1.

Example 7

Production was performed in the same manner as Example 1, except that regarding the slurry, carbon black of Example 1 was changed to carbon black (furnace black) having the primary particle size and DBP oil absorption amount shown in Table 1, the amount of carbon black was changed from 65.7 parts by weight to 46.1 parts by weight, the amount of the ionic surfactant was changed to 13.8 parts by weight, the amount of the acrylic resin was changed to 40.1 parts by weight (in terms of solid content), and the amount of the thickener was changed to 0 part by weight.

Example 8

Production was performed in the same manner as Example 1, except that regarding the slurry, carbon black of Example 1 was changed to carbon black (furnace black) having the primary particle size and DBP oil absorption amount shown in Table 1.

Example 9

Production was performed in the same manner as Example 1, except that regarding the slurry, carbon black of Example 1 was changed to carbon black (furnace black) having the primary particle size and DBP oil absorption amount shown in Table 1.

Example 10

Production was performed in the same manner as Example 1, except that regarding the slurry, carbon black of Example 1 was changed to carbon black (furnace black) having the primary particle size and DBP oil absorption amount shown in Table 1.

Example 11

Production was performed in the same manner as Example 1, except that regarding the slurry, carbon black of Example 1 was changed to carbon black (furnace black) having the primary particle size and DBP oil absorption amount shown in Table 1, the amount of carbon black was changed from 65.7 parts by weight to 10 parts by weight, the amount of the ionic surfactant was changed to 3 parts by weight, the amount of the acrylic resin was changed to 87 parts by weight (in terms of solid content), and the amount of the thickener was changed to 0 part by weight.

Comparative Example 1

Production was performed in the same manner as Example 1, except that regarding the slurry, carbon black of Example 1 was changed to carbon black (furnace black) having the primary particle size and DBP oil absorption amount shown in Table 2.

Comparative Example 2

Production was performed in the same manner as Example 1, except that regarding the slurry, carbon black of Example 1 was changed to carbon black (furnace black) having the primary particle size and DBP oil absorption amount shown in Table 2, the amount of carbon black was changed from 65.7 parts by weight to 59.2 parts by weight, the amount of the ionic surfactant was changed to 23.0 parts by weight, and the amount of the acrylic resin was changed to 16.4 parts by weight (in terms of solid content).

Comparative Example 3

Production was performed in the same manner as Example 1, except that regarding the slurry, the amount of carbon black was changed from 65.7 parts by weight to 75.7 parts by weight, the amount of the ionic surfactant was changed to 22.7 parts by weight, the amount of the acrylic resin was changed to 0 part by weight (in terms of solid content), and the amount of the thickener was changed to 1.5 parts by weight.

Comparative Example 4

Production was performed in the same manner as Example 1, except that regarding the slurry, carbon black of Example 1 was changed to carbon black (furnace black) having the primary particle size and DBP oil absorption amount shown in Table 2.

Comparative Example 5

Production was performed in the same manner as Example 1, except that regarding the slurry, carbon black of Example 1 was changed to carbon black (furnace black) having the primary particle size and DBP oil absorption amount shown in Table 2.

Comparative Example 6

Production was performed in the same manner as Example 1, except that regarding the slurry, carbon black of Example 1 was changed to carbon black (furnace black) having the primary particle size and DBP oil absorption amount shown in Table 2.

Comparative Example 7

Production was performed in the same manner as Example 1, except that a substrate not coated with the slurry was used.

Results of Examples and Comparative Examples

The results of Examples and Comparative Examples are shown in Table 1 and 2 below.

Table 1.

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Porosity [%] | 14.1 | 23.1 | 30.0 | 30.0 | 46.0 | 48.8 | 50.0 | 70.0 | 70.0 | 70.0 | 8.0 |
| Pore size [um] | 0.08 | 0.07 | 1.00 | 1.60 | 0.15 | 0.39 | 0.80 | 1.00 | 0.08 | 1.30 | 0.06 |
| Primary particle size [nm] | 6 | 16 | 16 | 20 | 23 | 48 | 30 | 30 | 22 | 40 | 30 |
| DBP absorption amount [mL/100 g] | 310 | 190 | 350 | 300 | 590 | 170 | 280 | 280 | 500 | 200 | 280 |
| Crack area ratio [%] | 1.0 | 1.0 | 0.0 | 0.0 | 0.0 | 0.0 | 0.0 | 0.0 | 0.0 | 0.0 | 2.0 |
| Initial DCA ratio 80% SoC | 1.11 | 1.14 | 1.15 | 1.10 | 1.10 | 1.10 | 1.09 | 1.07 | 1.08 | 1.09 | 1.06 |
| End voltage during cycle [mV] | 1,924 | 1,907 | 1,910 | 1,800 | 1,975 | 2,030 | 1,939 | 1,930 | 1,940 | 1,880 | 1,870 |

Table 2.

| | Comparative Example | | | | | | |
|---|---|---|---|---|---|---|---|
| | 1 | 2 | 3 | 4 | 5 | 6 | 7 |
| Porosity [%] | 4.2 | 1.0 | 5.0 | 80.0 | 80.0 | 5.0 | - |
| Pore size [um] | 0.04 | 0.04 | 0.04 | 0.08 | 1.30 | 1.00 | - |
| Primary particle size [nm] | 4 | 4 | 4 | 3 | 3 | 4 | - |
| DBP absorption amount [mL/100 g] | 180 | 180 | 180 | 150 | 140 | 170 | - |
| Crack area ratio [%] | 5.7 | 3.5 | 7.2 | 0.0 | 0.0 | 7.0 | - |
| Initial DCA ratio 80% SoC | 1.04 | 1.04 | 1.04 | 1.04 | 1.03 | 1.00 | 1.00 |
| End voltage during cycle [mV] | 1,804 | 1,800 | 1,796 | 1,805 | 1,807 | 1,801 | 1,750 |

As is apparent from the results of Examples and Comparative Examples, the initial charge acceptance performance at 80% SoC is improved in the region where the porosity of the layer is high. Although not to be bound by theory, in the case of high porosity, sulfate ions easily diffuse inside the layer, thus making it possible to prevent sulfate ions from becoming highly concentrated near the electrodes during charging, leading to an improvement in charge acceptance performance from the viewpoint of chemical equilibrium.

It is also apparent that the discharge voltage increases during cycle in the region where the pore size is large. Although not to be bound by theory, it is believed that when the pore size is large, the in-plane conductivity within the layer increases, thus making it possible to promote reductive decomposition of lead sulfate can be promoted, leading to an improvement in cycle voltage.

It is also apparent that the discharge voltage decreases during cycle as the crack area ratio increases. Although not to be bound by theory, it is believed that this is because the above layer functions as an auxiliary conductive path in the in-plane direction of the separator, thus promoting the decomposition reaction of lead sulfate, leading to an improvement in cycle characteristics. In this regard, it is believed that when the above layer has high crack area ratio, the formation of conductive paths is partially restricted, thus causing deterioration of the cycle characteristics, leading to a reduction in discharge end voltage during cycle.

Industrial Applicability

The separator for lead-acid batteries of the present disclosure is useful for use in a lead-acid battery, for example, a flooded battery (FB) and is particularly suitable as a separator for an enhanced flooded battery (EFB).

Reference Signs List

1: Direction of membrane thickness

**Claims**

1.   A separator for lead-acid batteries, comprising a substrate and a layer laminated on at least one side of the substrate, wherein the layer contains a carbon material and has a porosity of 7.0% or more and 75.0% or less.

2.   The separator for lead-acid batteries according to claim 1, wherein the layer has a porosity of 7.0% or more and 70.0% or less.

3.   The separator for lead-acid batteries according to claim 1 or 2, wherein the layer has a pore size of 0.05 $\mu$m or more.

4.   The separator for lead-acid batteries according to claim 1 or 2, wherein the layer has a pore size of 1.50 $\mu$m or less.

5.   The separator for lead-acid batteries according to claim 1 or 2, wherein the layer has a pore size of 1.30 $\mu$m or less.

6.   The separator for lead-acid batteries according to claim 1 or 2, wherein the carbon material accounts for 5 parts by weight or more and 98 parts by weight or less, based on 100 parts by weight of the total weight of the layer.

7.   The separator for lead-acid batteries according to claim 1 or 2, wherein the carbon material contains at least one selected from the group consisting of furnace black, acetylene black and Ketjen black.

8.   The separator for lead-acid batteries according to claim 1 or 2, wherein the substrate is microporous.

9.   The separator for lead-acid batteries according to claim 1 or 2, wherein the layer has a crack area ratio of 3% or less.

10.   The separator for lead-acid batteries according to claim 1 or 2, wherein the layer contains a resin.

11.   The separator for lead-acid batteries according to claim 1 or 2, wherein the resin contains an acrylic resin.

12.   A lead-acid battery comprising a battery case, a lead oxide positive electrode, a lead negative electrode and dilute sulfuric acid, wherein the separator for lead-acid batteries according to claim 1 or 2 is disposed between the lead oxide positive electrode and the lead negative electrode.

13.   The lead-acid battery according to claim 12, wherein the layer is disposed in a state of being in contact with the lead negative electrode.

14.   A lead-acid battery comprising a battery case, a lead oxide positive electrode, a lead negative electrode and dilute sulfuric acid, and comprising a substrate between the lead oxide positive electrode and the lead negative electrode, and comprising a layer between the substrate and the lead negative electrode, wherein the layer contains a carbon material and has a porosity of 7.0% or more and 70.0% or less, and has a pore size of 0.05 $\mu$m or more and 1.30 $\mu$m or less.

15.   The lead-acid battery according to claim 14, wherein the carbon material accounts for 5 parts by weight or more and 98 parts by weight or less, based on 100 parts by weight of the total weight of the layer.

16.   The lead-acid battery according to claim 14 or 15, wherein the carbon material contains at least one selected from the group consisting of furnace black, acetylene black and Ketjen black.

17. The lead-acid battery according to claim 14 or 15, wherein the substrate is microporous.

18. The lead-acid battery according to claim 14 or 15, wherein the electrolytic solution contains at least one selected from the group consisting of aluminum ion, lithium ion, sodium ion and zinc ion.

Fig. 1

## INTERNATIONAL SEARCH REPORT

International application No.

**PCT/JP2023/001338**

**A.  CLASSIFICATION OF SUBJECT MATTER**

*H01M 50/451*(2021.01)i; *H01M 10/08*(2006.01)i; *H01M 50/42*(2021.01)i; *H01M 50/434*(2021.01)i;
*H01M 50/446*(2021.01)i; *H01M 50/46*(2021.01)i; *H01M 50/491*(2021.01)i
FI:   H01M50/451; H01M10/08; H01M50/42; H01M50/434; H01M50/446; H01M50/46; H01M50/491

According to International Patent Classification (IPC) or to both national classification and IPC

**B.  FIELDS SEARCHED**

Minimum documentation searched (classification system followed by classification symbols)

H01M50/451; H01M10/08; H01M50/42; H01M50/434; H01M50/446; H01M50/46; H01M50/491

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2012-221833 A (GS YUASA CORP.) 12 November 2012 (2012-11-12) | 1-18 |
| A | JP 2017-33688 A (PANASONIC CORP.) 09 February 2017 (2017-02-09) | 1-18 |
| A | JP 2016-157663 A (HITACHI CHEMICAL CO., LTD.) 01 September 2016 (2016-09-01) | 1-18 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/001338**

| Patent document cited in search report | | | Publication date (day/month/year) | Patent family member(s) | Publication date (day/month/year) |
|---|---|---|---|---|---|
| JP | 2012-221833 | A | 12 November 2012 | (Family: none) | |
| JP | 2017-33688 | A | 09 February 2017 | (Family: none) | |
| JP | 2016-157663 | A | 01 September 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022010396 A

**Non-patent literature cited in the description**

- **YOSHINORI TAKEICHI**. Study on Improvement of Friction Resistance of PTFE by Addition of Carbon Black. *Grant-in-Aid for Scientific Research Report on the Research Achievements*, 05 March 2009